# EUROPÄISCHE PATENTSCHRIFT

(11) **EP 2 275 467 B1**
(45) Veröffentlichungstag und Bekanntmachung des Hinweises auf die Patenterteilung: **09.10.2013**
(21) Anmeldenummer: 10006894.9
(22) Anmeldetag: 03.07.2010
(51) Int. Cl.: C08G 18/10, C08G 18/38, C08G 18/50, C09D 175/04, C09J 175/04

(54) **NCO-Prepolymere aus formamidterminierten Verbindungen**
Nco-prepolymers from formamid-terminated compounds
Prepolymères à terminaison NCO obtenus à partir de composés ayant des terminaisons formamides

(30) Priorität: 17.07.2009 DE 102009033637
(43) Veröffentlichungstag der Anmeldung: 19.01.2011
(73) Patentinhaber: Bayer Intellectual Property GmbH, 40789 Monheim (DE)
(72) Erfinder: Blum, Harald, Dr., 97840 Hafenlohr (DE); Pfeiffer, Evelyn, Dr., 51375 Leverkusen (DE); Leimenstoll, Marc, Dr., 40721 Hilden (DE)
(74) Vertreter: BIP Patents

(56) Entgegenhaltungen:
- EP-A2- 2 098 547
- DE-A1- 10 163 857
- KANAMARU M ET AL: "A NEW CLASS OF POLYMER HAVING THE -CO-NH-CO-NH-CO- STRUCTURE: POLY(N,N'-DIACYLUREA)S SYNTHESIZED BY POLYADDITION OF DIAMIDES TO BIS(N-ACRYL ISOCYANATE)S" MACROMOLECULES, AMERICAN CHEMICAL SOCIETY, US LNKD- DOI:10.1021/MA00103A038, Bd. 27, Nr. 25, 5. Dezember 1994 (1994-12-05), XP000485392 ISSN: 0024-9297

## Beschreibung

Die Erfindung betrifft neue Prepolymere bzw. Polyisocyanate hergestellt aus Formamiden auf Basis von Di- oder höherfunktionellen aliphatischen, cycloaliphatischen oder aromatischen Aminen mit definiertem Molekulargewicht, also formamidterminierte niedermolekularen Verbindungen.

Isocyanatfunktionelle Polyurethane bzw. Prepolymere aus Polyolen und Polyisocyanaten sind seit langem bekannt und die Grundlage vieler existierender Handelsprodukte.

Reaktive Polyurethane verfügen über reaktive Endgruppen, die mit Wasser oder anderen Verbindungen, die über ein acides Wasserstoffatom verfügen, reagieren können. Diese Form der Reaktivität ermöglicht es, die reaktiven Polyurethane in verarbeitbarem Zustand (in der Regel flüssig bis hochviskos) in der gewünschten Art an den gewünschten Ort zu bringen und durch die Zugabe von Wasser oder anderen Verbindungen, die über ein acides Wasserstoffatom verfügen (in diesem Fall als Härter bezeichnet) auszuhärten.

Bei diesen sogenannten 2K-Systemen erfolgt die Zugabe des Härters in der Regel unmittelbar vor der Applikation, im Normalfall mit Hilfe eines Misch- und Dosiersystems, wobei dem Verarbeiter nach der Härterzugabe nur noch eine begrenzte Verarbeitungszeit (Topfzeit) zur Verfügung steht.

Es ist jedoch ebenfalls möglich, Polyurethane mit reaktiven Endgruppen ohne Zugabe von Härtern alleine durch die Reaktion mit Luftfeuchtigkeit auszuhärten (1K- Systeme). Solche 1K-Systeme weisen gegenüber den 2K-Systemen in der Regel den Vorteil auf, dass für den Anwender das oft lästige Mischen der häufig viskosen Komponenten vor der Applikation entfällt.

Zu den üblicherweise in 1K- oder 2K-Systemen eingesetzten Polyurethanen mit reaktiven Endgruppen zählen beispielsweise die Polyurethane mit bevorzugt endständigen Isocyanat- bzw. NCO-Gruppen.

Um Polyurethane mit endständigen NCO-Gruppen zu erhalten, ist es üblich, polyfunktionelle Alkohole mit einem Überschuss an monomeren Polyisocyanaten, in der Regel Diisocyanaten, zur Reaktion zu bringen.

Es ist bekannt, dass am Ende der Umsetzung, unabhängig von der Reaktionszeit, eine gewisse Menge des im Überschuss eingesetzten monomeren Diisocyanats übrig bleibt. Störend wirkt sich ein Gehalt an monomeren Diisocyanat beispielsweise bei der Verarbeitung von Kleb- und Dichtstoffen auf Basis reaktiver Polyurethane aus. Schon bei Raumtemperatur können Diisocyanate, wie IPDI oder TDI, einen nicht zu vernachlässigenden Dampfdruck aufweisen. Dieser merkliche Dampfdruck ist insbesondere bei einem Sprühauftrag gravierend, da hierbei signifikante Mengen an Isocyanatdämpfen über dem Applikationsgerät auftreten können, die eine reizende und sensibilisierende Wirkung aufweisen, also toxisch und folglich unerwünscht sind.

Für viele Anwendungsfelder ist daher die Entwicklung von reaktiven Polyurethanen bzw. Prepolymeren mit einem drastisch reduzierten Anteil an monomeren Diisocyanaten in hohem Maße wünschenswert.

Reaktive Prepolymere bzw. Polyurethane mit reduziertem Restmonomergehalt können beispielsweise nach dem in der WO1997046603 gelehrten Verfahren hergestellt werden. Hierbei wird ein Überschuss an Diisocyanat mit Polyolen umgesetzt und das nach der Reaktion verbleibende, überschüssige monomere Diisocyanat destillativ entfernt. Nachteilig an diesem Verfahren ist, dass Produkte mit hohen NCO-Gehalten typischerweise extrem hohe Viskositäten besitzen.

Alternativ lassen sich reaktive Prepolymere bzw. Polyurethane mit reduziertem Restmonomergehalt nach den Lehren von beispielsweise DE-A 10 229 519 oder DE-A 10 163 857 herstellen. Hierbei werden Diisocyanate mit unterschiedlich reaktiven NCO-Gruppen verwendet und in geringem Überschuss mit Polyol umgesetzt. Nachteilig an dieser Vorgehensweise ist, dass die resultierenden Produkte typischerweise geringe NCO-Gehalte aufweisen.

Es besteht daher nach wie vor der Wunsch, reaktive Prepolymere bzw. Polyurethane bereitzustellen, die niedrigeViskositäten, hohe NCO-Gehalte und geringe Restmonomergehalte aufweisen.

Höhermolekulare Polyetheramine können mit Ameisensäurealkylestern zu den entsprechenden formamidterminierten Oligomeren und weiter mit Polyisocyanaten zu den entsprechenden Prepolymeren, also zu Acylharnstoffprepolymeren, umgesetzt werden. Diese weisen eine allgemein niedrige Viskosität auf.

Prepolymere oder Polyisocyanate aus Di- oder Polyisocyanaten und formamidterminierten niedermolekularen Verbindungen sind neu.

Es wurde nun überraschend gefunden, dass durch Umsetzung von formamidterminierten niedermolekularen Verbindungen mit Polyisocyanaten Acylhamstoff-Prepolymere bzw. höhermolekulare Polyisocyanate zugänglich sind, die sich durch eine niedrige Viskosität auszeichnen, ohne dass sie die für etliche Anwendungen störende Polyetherstruktureinheiten aufweisen.

Gegenstand der Erfindung sind daher Prepolymere aus Di- oder Polyisocyanaten und formamidterminierten niedermolekularen Verbindungen die keine Polyetherstruktureinheiten aufweisen und der allgemeinen Formel (II)

X-[-N(CHO)-CO-NH-R¹-NCO]ₙ (II)

worin
- X: einen linearen oder verzweigten aliphatischen, cycloaliphatischen, heterocyclischen und/oder aromatischen Rest mit 2 bis 40 C-Atomen bedeutet, der optional selbst substituiert sein kann oder weitere Heteroatome enthalten kann, und
- R: einen organischen Rest bedeutet, der weitere freie Isocyanatgruppen und/oder eine oder mehrere Urethan, Biuret, Carbodiimid, Isocyanurate, Allophanat, Iminooxadi- azinedione und/oder Uretdion-Struktureinheiten enthalten kann, und worin
n ≥ 2 ist.

Formamidterminierte niedermolekulare Verbindungen sind beispielsweise durch Reaktion von Ameisensäure-C1-C4-alkylestern mit geeigneten definierten Aminen zugänglich.

Geeignete Amine X(NH₂)ₙ mit n ≥ 2 sind beispielsweise Di- und/oder Triamine mit linearen und/oder verzweigten und/oder Substituenten tragenden und/oder Heteroatome, beispielsweise Sauerstoff-Atome, enthaltenden aliphatischen, cycloaliphatischen, heterocyclischen und/oder aromatischen Struktureinheiten mit 2 bis 40, bevorzugt 2 bis 20 C-Atomen. Sie haben ein Molekulargewicht von 45 bis 700, bevorzugt 60 bis 300 g/mol.

Als Di- oder Triamine werden bevorzugt aliphatische Amine z.B. Ethylendiamin, 1,2-Propylendiamin, 1,3-Propylendiamin, 1,4-Butandiamin, Neopentandiamin, 1,5-Diamino-2-methylpentan (Dytek^{®} A, DuPont), 2-Butyl-2-ethyl-1,5-pentandiamin, 1,6-Hexamethylendiamin, 2,5-Diamino-2,5-dimethylhexan, 2,2,4- und/oder 2,4,4-Trimethyl-1,6-diaminohexan, 1,8-Diaminooctan, 1,11-Diaminoundecan, 1,12-Diaminododecan, 4-Aminomethyl-1,8-octandiamin (Triaminononan), Diethylentriamin, Triethylentetramin, cycloaliphatische Amine wie z.B. 1-Amino-3,3,5-trimethyl-5-aminomethyl-cyclohexan (Isophorondiamin, IPDA), TCD-Diamin, 1,4-Cyclohexandiamin, 2,4- und/oder 2,6-Hexahydrotoluylendiamin (H₆TDA), Isopropyl-2,4-diaminocyclohexan und/oder Isopropyl-2,6-diaminocyclohexan, Tricyclodecanbis(methylamin), 1,3-Bis-(aminomethyl)-cyclohexan, 2,4'- und/oder 4,4'-Diaminodicyclohexylmethan (PACM 20), 3,3'-Dimethyl-4,4'-diamino-dicyclohexylmethan (Laromin^{®} C 260, BASF AG, DE), die isomeren, eine Methylgruppe als Kernsubstituenten aufweisenden Diaminodicyclohexylmethane (C-Monomethyl-diaminodicyclohexylmethane), 3(4)-Aminomethyl-1-methylcyclohexylamin (AMCA) sowie araliphatische Di-oder Triamine, wie z.B. 1,3-Diaminobenzol, 1,4-Diaminobenzol, 2,4- und/oder 2,6-Diaminotoluol (TDA), 1,3-Bis-(aminomethyl)-benzol, 3,5-Diethyltoluol-2,4-diamin, m-Xylylendiamin. 4,6-Dimethyl-1,3-benzoldimethanamin, 4,4'- und/oder 2,4'- und/oder 2,2'-Methylenbisbenzolamin (MDA), Dimerfettsäurediamin, Bis-(3-aminopropyl)-methylamin, 4,9-Dioxadodecan-1,12-diamin, 4,7,10-Trioxatridecan-1,13-diamin, alkoxysilangruppenhaltige Diamine eingesetzt. Ebenfalls geeignet sind Michaeladdukte, die z.B. durch Reaktion bifunktioneller, primärer Amine mit ungesättigte Gruppen enthaltenden Verbindungen, wie z.B Hexandioldiacrylat etc. erhalten werden.

Die Herstellung der Formamid-terminierten niedermolekularen Verbindungen der allgemeinen Formel (II) kann auf unterschiedlichste Art und Weise erfolgen:
Die Umsetzung des Polyamins, vorzugsweise Di- und/oder Triamins X(NH₂)ₙ, kann in einem Überschuss an Ameisensäurealkylester bei dessen Siedetemperatur erfolgen, wobei nach erfolgter Reaktion der Amino- zur Formamidgruppe der Überschuss an Ameisensäurealkylester und der ebenfalls entstehende Alkohol abdestilliert werden.

Möglich ist weiterhin die Umsetzung der Di- oder Triamine zu den furmamidterminierten niedermolekularen Verbindungen mit Ameisensäure oder anderen Ameisensäurederivaten, wie Kohlenmonoxid, gemischten Ameisensäure-Carbonsäureanhydriden, niedermolekularen Amiden oder Aktivestern der Ameisensäure oder vorläufigen Reaktionsprodukten der Ameisensäure mit Amidkupplungsreagentien, wie Carbodiimiden oder kondensierten Phosphosäurederivaten.

Ebenfalls möglich ist die Umsetzung von Formamid, beziehungsweise dem mit einer starken Base generierten Anion des Formamids, mit Alkylierungsreagentien der Formel (I)

X-[A]ₚ (I)

wobei X für einen aliphatischen, cycloaliphatischen oder aromatischen Rest, p für eine natürliche Zahl von 2 bis 3 und A für eine Abgangsgruppe wie beispielsweise Chlorid, Bromid, Iodid, Mesylat, Tosylat oder Triflat steht.

Die erfindungsgemäßen Prepolymere sind Umsetzungsprodukte aus di- bzw. polyfunktionellen Polyisocyanaten und Formamiden auf Basis von aliphatischen, cycloaliphatischen und/oder aromatischen definierten Diaminen bzw. Triaminen mit 2 bis 15 C-Atomen und ggf. Heteroatome enthaltend und einem Molekulargewicht von 60 bis 300.

Bei den erfindungsgemäßen Prepolymeren oder Polyisocyanaten handelt es sich bevorzugt um Prepolymere der allgemeinen Formel (II)

X-[-N(CHO)-CO-NH-R¹-NCO]ₙ (II)

wobei X entsprechend der verwendeten Di- oder Polyamine für einen aliphatischen, cycloaliphatischen oder aromatischen Rest, R¹ für den durch das eingesetzte Polyisocyanat eingeführte Rest und n für eine natürliche Zahl von 2 bis 5 steht.

Ein weiterer Gegenstand der Erfindung ist ein Verfahren zur Herstellung der erfindungsgemäßen Prepolymere, **dadurch gekennzeichnet, dass** Di- oder Polyisocyanate mit einer formamidterminierten niedermolekularen Verbindung umgesetzt werden und der gegebenenfalls vorhandene Überschuss all Di- oder Polyisocyanat durch Destillation abgetrennt wird.

Die Umsetzung der formamidterminierten niedermolekularen Verbindungen mit den Di- oder Polyisocyanaten erfolgt bei Temperaturen von 40 bis 120 °C, vorzugsweise bei 60 bis 80 °C, in Gegenwart, oder vorzugsweise in Abwesenheit, von Katalysatoren, wie Zink-oder Zinnverbindungen. Das Di- oder Polyisocyanat wird dabei vorzugsweise so eingesetzt, dass ein 2-15 fach molarer Überschuss an Isocanatgruppen bezogen auf die isocyanatreaktiven Gruppen der formamidterminierten niedermolekulare Verbindung vorliegt und der Überschuss durch Destillation, vorzugsweise Dünnschichtdestillation, im Vakuum nach der Reaktion zum Acylhamstoff-Prepolymeren entfernt wird.

Geeignete Polyisocyanatkomponenten können Polyisocyanate sein, die mindestens zwei freie Isocyanatgruppen pro Molekül aufweisen. Geeignet sind z.B. Di- bzw. Polyisocyanate

X-(NCO)ₘ,

wobei m = 2 bis 10 und X für einen aliphatischen Kohlenwasserstoffrest mit 4 bis 36 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht.

Beispiele derartiger Di- oder höherfunktionelle Polyisocyanate sind 1,4-, 1,3-, und/oder 1,2-Cyclohexandiisocyanat, 1-Methyl-2,4-diisocyanato-cyclohexan, 1-Methyl-2,6-diisocyanato-cyclohexan, Tetramethylendiisocyanat, Octamethylendiisocyanat, Decamethylendiisocyanat, Dodecamethylendiisocyanat, H₆ - 2,4- und/oder 2,6- Diisocyanatotoluol, 4,4'-Diisocyanatodiphenylmethan, 2,4'-Diisocyanatodiphenylmethan, 2,2'- Diisocyanatodiphenylmethan, meta- und/oder para-Xylylendiisocyanat, 2,4-Diisocyanatotoluol und/oder 2,6-Diisocyanatotoluol, Isopropenyldimethyltoluylendiisocyanat, α ,α,α,'α,'-Tetra-methyl-mund/oder p-Xylylendiisocyanat, 1,6-Hexamethylendiisocyanat, Trimethylhexandiisocyanat, Tetramethylhexandiisocyanat, Nonantriisocyanat, 1-Isocyanato-3,3,5-trimethyl-5-isocyanatomethylcyclohexan (Isophorondiisocyanat), 4,4'-Diisocyanato-dicyclohexylmethan und/oder 2,4'-Diisocyanato-dicyclohexylmethan und/oder 2,2'-Diisocyanato-dicyclohexylmethan sowie deren Mono- und Dimethylsubstituierten Derivate.

Ebenfalls geeignet sind Umsetzungsprodukte, Homologe, Oligomere und/oder Polymere der genannten Polyisocyanate mit Urethan-, Biuret-, Carbodiimid-, Isocyanurat-, Allophanat-, Iminooxadiazindion- und/oder Uretdionstruktureinheiten, sowie Mischungen der beispielhaft genannten, ggf. auch mit anderen Isocyanaten.

Die durchschnittliche Funktionalität der Polyisocyanatkomponente beträgt 1,0 bis 4, vorzugsweise 1,8 bis 3, besonders bevorzugt 2,0 bis 2,5.

Bevorzugt besteht die Polyisocyanatkomponente B) aus flüssigen oligomeren Polyisocyanaten auf Basis von Hexamethylendiisocyanat, Isophorondiisocyanat, H₆ - 2,4- und/oder 2,6- Diisocyanatotoluol, 4,4'-Diisocyanatodiphenylmethan, 2,4'-Diisocyanatodiphenylmethan, 2,2'- Diisocyanatodiphenylmethan, meta- und/oder para-Xylylendiisocyanat, 2,4-Diisocyanatotoluol und/oder 2,6-Diisocyanatotoluol mit Urethan-, Harnstoff-, Isocyanurat-, Biuret-, Uretdion-, Carbodiimid-, Allophanat- und/oder Iminooxadiazindion-Struktureinheiten oder/und urethan- und/oder allophanatgruppenhaltigen Umsetzungsprodukten bzw. Prepolymeren der bevorzugt genannten Diisocyanate mit hydroxyfunktionellen Verbindungen wie z.B. Trimethylolpropan, Butandiol, Ethylenglykol, Diethylenglykol, Propylenglykol, Neopentylglykol, C2-, C3 und/oder C4-Polyether, Polyester, Polycarbonate, Rizinusöl.

Besonders bevorzugt besteht die Polyisocyanatkomponente B) aus Hexamethylendiisocyanat, Isophorondiisocyanat, 2,4-Diisocyanatotoluol und/oder 2,6-Diisocyanatotoluol, 4,4'-Diisocyanatodiphenylmethan, 2,4'-Diisocyanatodiphenylmethan, 2,2'- Diisocyanatodiphenylmethan oder Isomerengemischen.

Die erfindungsgemäßen Prepolymere sind in allen Bereichen anwendbar, wo auch die dem Stande der Technik entsprechenden Prepolymeren eingesetzt werden, wie Klebstoffe, Lacke, PUR-Form- oder Schaumkörper oder Dichtstoffe. Sie weisen dabei insbesondere den Vorteil einer niedrigeren Viskosität auf.

Geringe Viskositäten sind z.B. bei den Anwendungen "Flexible Packaging" oder "reaktive Polyurethan Schmelzklebstoffe" (Hotmelts) von besonderem Vorteil. Unter "Flexible Packaging" wird hier die Herstellung von Folienverbunden durch Verkleben mit einem auf Polyurethan basierten Klebstoff verstanden. Der Klebstoff wird hierbei typischerweise in flüssiger Form auf ein Folie aufgetragen und direkt danach mit einer zweiten Folie gefügt. Unter reaktiven Polyurethan-Schmelzklebstoffen werden Klebstoffsysteme verstanden, welche bei erhöhten Temperaturen in Form einer Schmelze vorliegen und bei diesen Temperaturen flüssig appliziert werden. Nach Applikation und Fügen kühlt der noch reaktive Klebstoff ab und baut dabei rapide Anfangsfestigkeit auf. Die Endfestigkeit wird nach vollständiger Aushärtung mit Luftfeuchtigkeit erreicht.

Die Verwendung von Formamid-basierenden Prepolymeren/Polyisocyanaten ist auch in Kombination mit Polyisocyanaten und/oder Prepolymeren mit Urethan-, Biuret-, Carbodiimid-, Isocyanurat-, Allophanat-, Iminooxadiazindion-, Uretdion-, Ester-, Polyester, Ether-, Polyether-, Carbonat-, Polycarbonatstruktureinheiten möglich.

### Beispiele:

Verwendete Ausgangsstoffe:
   Desmodur^{®} H (Bayer MaterialScience AG, Leverkusen, DE), monomeres HDI,
   1,6-Hexandiol,
   1,10-Decandiol,
   1,6-Hexamethylendiamin,
   2-Methyl-1,5-diaminopentan,
   Irganox^{®} 1076 (Ciba, CH), ein sterisch gehindertes Phenol.

### Beispiel 1

Man tropft bei maximal 50 °C zu 116 g 1,6-Hexamethylendiamin gelöst in 170 g Ethanol innerhalb von 4 Stunden 222 g Ameisensäureethylester und lässt 4 Stunden nachrühren. Dann werden der überschüssige Ameisensäureethylester und das gebildete und eingesetzte Ethanol abdestilliert. Die gebildete formamidterminierte definierte Verbindung wird bei 70°C innerhalb von 2 Stunden zu 2523 g Desmodur^{®} H, 1 g Irganox^{®} 1076 und 2 g Benzoylchlorid zudosiert und bei 70 °C 8 Stunden nachgerührt. Anschließend erfolgt eine Abtrennung des überschüssigen Desmodur^{®} H in einer Dünnschicht-Destillation bei 130 °C.

Man erhält ein Acylhamstoff-Präpolymer mit einem NCO-Gehalt von 15,7 Gew.-% und Viskositäten wie in Tabelle 1 dargestellt. Der Restmonomergehalt beträgt hierbei 0,46 Gew.-%.

### Beispiel 2

Man tropft bei maximal 50 °C zu 116 g 2-Methyl-1,5-diaminopentan innerhalb von 4 Stunden 222 g Ameisensäureethylester und lässt 4 Stunden nachrühren. Dann werden der überschüssige Ameisensäureethylester und das gebildete Ethanol abdestilliert. Die gebildete formamidterminierte definierte Verbindung wird bei 70 °C innerhalb von 2 Stunden zu 2523 g Desmodur^{®} H, 1 g Irganox^{®} 1076 und 2 g Benzoylchlorid zudosiert und bei 70 °C 8 Stunden nachgerührt. Anschließend erfolgt eine Abtrennung des überschüssigen Desmodur^{®} H in einer Dünnschicht-Destillation bei 130 °C.

Man erhält ein Acylhamstoff-Präpolymer mit einem NCO-Gehalt von 15,7 Gew.-% und Viskositäten wie in Tabelle 1 dargestellt. Der Restmonomergehalt beträgt hierbei 0,07 Gew.-%.

### Beispiel 3

Man tropft bei maximal 50 °C zu 220 g 4,7,10-Trioxatridecan-1,13-diamin innerhalb von 4 Stunden 222 g Ameisensäureethylester und lässt 4 Stunden nachrühren. Dann werden der überschüssige Ameisensäureethylester und das gebildete Ethanol abdestilliert. Die gebildete formamidterminierte definierte Verbindung wird bei 60 °C innerhalb von 2 Stunden zu 3334 g Desmodur^{®} I, 1 g Irganox^{®} 1076 und 1 g Benzoylchlorid zudosiert und bei 60 °C 8 Stunden nachgerührt. Anschließend erfolgt eine Abtrennung des überschüssigen Desmodur^{®} I in einer Dünnschicht-Destillation bei 160 °C.

Man erhält ein Acylhamstoff-Präpolymer mit einem NCO-Gehalt von 9,3 Gew.-% und Viskositäten wie in Tabelle 1 dargestellt. Der Restmonomergehalt beträgt hierbei 0,29 Gew.-%.

### Beispiel 4

Man tropft bei maximal 50 °C zu 116 g 2-Methyl-1,5-diaminopentan innerhalb von 4 Stunden 222 g Ameisensäureethylester und lässt 4 Stunden nachrühren. Dann werden der überschüssige Ameisensäureethylester und das gebildete Ethanol abdestilliert. Die gebildete formamidterminierte definierte Verbindung wird bei 70 °C innerhalb von 2 Stunden zu 2612 g Desmodur^{®} T, 1 g Irganox^{®} 1076 und 1 g Benzoylchlorid zudosiert und bei 70 °C 8 Stunden nachgerührt. Anschließend erfolgt eine Abtrennung des überschüssigen Desmodur^{®} T in einer Dünnschicht-Destillation bei 130 °C.

Man erhält ein Acylhamstoff-Präpolymer mit einem NCO-Gehalt von 16,1 Gew.-% und Viskositäten wie in Tabelle 1 dargestellt. Der Restmonomergehalt beträgt hierbei 0,81 Gew.-%.

### Beispiel 5

Man tropft bei maximal 50 °C zu 116 g 2-Methyl-1,5-diaminopentan innerhalb von 4 Stunden 222 g Ameisensäureethylester und lässt 4 Stunden nachrühren. Dann werden der überschüssige Ameisensäureethylester und das gebildete Ethanol abdestilliert. Die gebildete formamidterminierte definierte Verbindung wird bei 70 °C innerhalb von 2 Stunden zu einer Mischung von 1262 g Desmodur^{®} H, 1667 g Desmodur^{®} I, 1,5 g Irganox^{®} 1076 und 1,5 g Benzoylchlorid zudosiert und bei 70 °C 8 Stunden nachgerührt. Anschließend erfolgt eine Abtrennung des überschüssigen Desmodur^{®} H und Desmodur^{®} I in einer Dünnschicht-Destillation bei 140-170 °C.

Man erhält ein Acylhamstoff-Präpolyiner mit einem NCO-Gehalt von 13,1 Gew.-% und einerViskosität von 6940000 mPa*s bei 25 °C. Der Restmonomergehalt beträgt hierbei für HDI 0,16 Gew.-% und für IPDI 0,60 Gew.-%.

### Beispiel 6

Innerhalb von 2 Stunden wird bei 70 °C zu 2523 g Desmodur^{®} H, 1,5 g Irganox^{®} 1076 und 1,5 g Benzoylchlorid eine Mischung von zwei vorab getrennt voneinander synthetisierten formamidterminierten definierten Verbindung (86 g 2-Methylpentan-1,5-pentandiformamid + 86 g Hexamethylendiformamid) zudosiert und bei 70 °C 8 Stunden nachgerührt. Anschließend erfolgt eine Abtrennung des überschüssigen Desmodur^{®} H in einer Dünnschicht-Destillation bei 130 °C.

Man erhält ein Acylhamstoff-Präpolymer mit einem NCO-Gehalt von 15,9 Gew.-% und einerViskosität von 6600 mPa*s bei 25 °C. Der Restmonomergehalt beträgt hierbei lediglich 0,05 Gew.-%.

### Vergleichsbeispiel 1

Man tropft bei 90 °C 8 g 1,6-Hexandiol innerhalb von 1 Stunden zu 192 g Desmodur^{®} H und lässt 8 Stunden nar-hriihran Anschließend erfolgt eine Abtrennung des überschüssigen Desmodur^{®} H durch Dünnschicht-Destillation bei 130 °C.

Man erhält ein Polyurethan-Präpolymer mit einem NCO-Gehalt von 15,0 Gew.-% und Viskositäten wie in Tabelle 1 dargestellt. Der Restmonomergehalt beträgt hierbei 3,8 Gew.-%.

### Vergleichsbeispiel 2

Man tropft bei 90 °C 12 g 1,10-Decandiol innerhalb von 1 Stunden zu 188 g Desmodur^{®} H und lässt 8 Stunden nachrühren. Anschließend erfolgt eine Abtrennung des überschüssigen Desmodur^{®} H durch Dünnschicht-Destillation bei 130 °C.

Man erhält ein Polyurethan-Präpolymer mit einem NCO-Gehalt von 13,7 Gew.-% und Viskositäten wie in Tabelle 1 dargestellt. Der Restmonomergehalt beträgt hierbei 3,6 Gew.-%.

**Tabelle 1: Viskositäten der Beispiele 1 bis 4 und der Vergleichsbeispiele bei unterschiedlichen Temperaturen**

| | Viskosität in mPa*s | | | | | |
|---|---|---|---|---|---|---|
| bei °C | Bsp. 1 | Bsp. 2 | Bsp. 3 | Bsp. 4 | Vergleich 1 | Vergleich 2 |
| 25 | 5145 | 9290 | fest | fest | fest | fest |
| 50 | 513 | 693 | 9397 | fest | fest | fest |
| 75 | 121 | 142 | 874 | 28750 | fest | fest |
| 100 | 45 | 52 | 135 | 2339 | 220 | 69 |

## Patentansprüche

1. Prepolymere, die keine Polyetherstruktureinheiten aufweisen und der allgemeinen Formel (II)
X-[-N(CHO)-CO-NH-R¹-NCO]ₙ (II)
entsprechen, in welcher
X für eine lineare oder verzweigte, gegebenenfalls weitere Substituenten tragende und/oder Heteroatome enthaltende aliphatische, cycloaliphatische, heterocyclische und/oder aromatische Struktureinheit mit 2 bis 40 C-Atomen steht,
R¹ für den durch das eingesetzte Polyisocyanat OCN-R¹-NCO eingeführte Rest steht und
n≥2 ist.

2. Prepolymere gemäß Anspruch 1, **dadurch gekennzeichnet dass** als das Strukturelement X beisteuernde Polyamine X(NH₂)ₙ Verbindungen ausgewählt aus der Gruppe bestehend aus Ethylendiamin, 1,2-Propylendiamin, 1,3-Propylendiamin, 1,4-Butandiamin, Neopentandiamin, 1,5-Diamino-2-methylpentan, 2-Butyl-2-ethyl-1,5-pentandiamin, 1,6-Hexamethylendiamin, 2,5-Diamino-2,5-dimethylhexan, 2,2,4- und/oder 2,4,4-Trimethyl-1,6-diaminohexan, 1,8-Diaminooctan, 1,11-Diaminoundecan, 1,12-Diaminododecan, 4-Aminomethyl-1,8-octandiamin (Triaminononan), Diethylentriamin, Triethylentetramin, cycloaliphatische Amine wie z.B. l-Amino-3,3,5-trimethyl-5-aminomethyl-cyclohexan (Isophorondiamin, IPDA), TCD-Diamin, 1,4-Cyclohexandiamin, 2,4- und/oder 2,6-Hexahydrotoluylendiamin (H₆TDA), Isopropyl-2,4-diaminocyclohexan und/oder Isopropyl-2,6-diaminocyclohexan, Tricyclodecanbis(methylamin), 1,3-Bis-(aminomethyl)-cyclohexan, 2,4'- und/oder 4,4'-Diaminodicyclohexylmethan, 3,3'-Dimethyl-4,4'-diamino-dicyclohexylmethan, die Isomeren, eine Methylgruppe als Kernsubstituenten aufweisenden Diaminodicyclohexylmethane (C-Monomethyl-diaminodicyclohexylmethane), 3(4)-Aminomethyl-1-methylcyclohexylamin (AMCA, 1,3-Diaminobenzol, 1,4-Diaminobenzol, 2,4-und 2,6-Diaminotoluol (TDA), 1,3-Bis-(aminomethyl)-benzol, 3,5-Diethyltoluol-2,4-diamin, m-Xylylendiamin. 4,6-Dimethyl-1,3-benzoldimethanamin, 4,4'- und/oder 2,4'- und/oder 2,2'-Methylenbisbenzolamin, Dimerfettsäurediamin, Bis-(3-amino-propyl)-methylamin, 4,9-Dioxadodecan-1,12-diamin, 4,7,10-Trioxatridecan-1,13-diamin, alkoxysilangruppenhaltige Diamine, Michaeladdukte, die durch Reaktion bifunktioneller, primärer Amine mit ungesättigte Gruppen enthaltenden Verbindungen erhalten werden, eingesetzt werden.

3. Verfahren zur Herstellung von Prepolymeren gemäß Anspruch 1, **dadurch gekennzeichnet, dass** Di- oder Polyisocyanate mit einer formamidterminierten niedermolekularen Verbindung umgesetzt werden und der gegebenenfalls vorhandene Überschuss an Diisocyanat durch Destillation abgetrennt wird.

4. Verfahren zur Herstellung von Prepolymeren gemäß Anspruch 3, **dadurch gekennzeichnet, dass** n bis (n x 10) Mole an Di- oder Polyisocyanaten mit einem Mol an formamidterminierter niedermolekuarer Verbindung der Formel (III)
X-[-NH(CHO)]ₙ (III),
wobei X und n die in Anspruch 1 angegebene Bedeutung haben, umgesetzt werden, und der gegebenenfalls vorhandenen Überschuss an Diisocyanat durch Destillation abgetrennt wird.

5. Verwendung von Prepolymeren gemäß Anspruch 1 zur Herstellung von Kleb- und Dichtstoffen.

6. Verwendung von Prepolymeren gemäß Anspruch 1 zur Herstellung von Lacken.

7. Verwendung von Prepolymeren gemäß Anspruch 1 zur Herstellung von PUR-Form- oder Schaumkörpern.

8. Prepolymere gemäß Anspruch 1 enthaltende Klebstoffe.

9. Prepolymere gemäß Anspruch 1 enthaltende Dichtstoffe.

10. Prepolymere gemäß Anspruch 1 enthaltende Lacke.

## Claims

1. Prepolymers which have no polyether structural units and which comply with the general formula (II)
X-[-N(CHO)-CO-NH-R¹-NCO]ₙ (II)
in which
X is a linear or branched, aliphatic, cycloaliphatic, heterocyclic and/or aromatic structural unit having from 2 to 40 carbon atoms and optionally bearing further substituents and/or comprising heteroatoms,
R¹ is the moiety introduced via the polyisocyanate OCN-R¹-NCO used and
n ≥ 2.

2. Prepolymers according to Claim 1, **characterized in that** polyamines X(NH₂)ₙ used that contribute the structural element X comprise compounds selected from the group consisting of ethylenediamine, 1,2-propylenediamine, 1,3-propylenediamine, 1,4-butanediamine, neopentanediamine, 1,5-diamino-2-methylpentane, 2-butyl-2-ethyl-1,5-pentanediamine, 1,6-hexamethylenediamine, 2,5-diamino-2,5-dimethylhexane, 2,2,4- and/or 2,4,4-trimethyl-1,6-diaminohexane, 1,8-diaminooctane, 1,11-diamino-undecane, 1,12-diaminododecane, 4-aminomethyl-1,8-octanediamine (triaminononane), diethylenetriamine, triethylenetetramine, cycloaliphatic amines such as 1-amino-3,3,5-trimethyl-5-amino-methylcyclohexane (isophoronediamine, IPDA), TCD diamine, 1,4-cyclohexanediamine, 2,4- and/or 2,6-hexahydrotolylenediamine (H₆TDA), isopropyl-2,4-diaminocyclohexane and/or isopropyl-2,6-diamino-cyclohexane, tricyclodecanebis(methylamine), 1,3-bis(aminomethyl)cyclohexane, 2,4'- and/or 4,4'-diaminodicyclohexylmethane, 3,3'-dimethyl-4,4'-diaminodicyclohexylmethane, the isomeric diamino-dicyclohexylmethanes having a methyl group as ring substituent (C-monomethyldiaminodicyclohexylmethanes), 3(4)-aminomethyl-1-methylcyclohexylamine (AMCA), 1,3-diaminobenzene, 1,4-diaminobenzene, 2,4- and 2,6-diaminotoluene (TDA), 1,3-bis(aminomethyl)benzene, 3,5-diethyltoluene-2,4-diamine, m-xylylenediamine, 4,6-dimethyl-1,3-bis(aminomethyl)benzene, 4,4'- and/or 2,4'- and/or 2,2'-methylenedianiline, dimer fatty acid diamine, bis(3-aminopropyl)methylamine, 4,9-dioxadodecane-1,12-diamine, 4,7,10-trioxatridecane-1,13-diamine, diamines containing alkoxysilane groups, Michael adducts obtained via reaction of bifunctional, primary amines with compounds comprising unsaturated groups.

3. Process for the production of prepolymers according to Claim 1, **characterized in that** di- or polyisocyanates are reacted with a formamide-terminated low-molecular-weight compound, and any excess of diisocyanate present is removed by distillation.

4. Process for the production of prepolymers according to Claim 3, **characterized in that** from n to (n × 10) moles of di- or polyisocyanates are reacted with one mole of formamide-terminated low-molecular-weight compound of the formula (III)
X-[-NH(CHO)]ₙ (III),
where X and n are as defined in Claim 1, and any excess of diisocyanate present is removed by distillation.

5. Use of prepolymers according to Claim 1 for the production of adhesives and sealants.

6. Use of prepolymers according to Claim 1 for the production of coating materials.

7. Use of prepolymers according to Claim 1 for the production of PU mouldings or of foam mouldings.

8. Adhesives comprising prepolymers according to Claim 1.

9. Sealants comprising prepolymers according to Claim 1.

10. Coating materials comprising prepolymers according to Claim 1.

## Revendications

1. Prépolymères, qui ne comportent pas d'éléments structuraux polyéther et correspondent à la formule générale (II)
X-[-N(CHO)-CO-NH-R¹-NCO]ₙ (II)
dans laquelle
X représente un élément structural linéaire ou ramifié, aliphatique, cycloaliphatique, hétérocyclique et/ou aromatique ayant de 2 à 40 atomes de carbone, éventuellement portant d'autres substituants et/ou contenant des hétéroatomes,
R¹ représente le radical introduit par le polyisocyanate OCN-R¹-NCO utilisé et
n est ≥ 2.

2. Prépolymères selon la revendication 1, **caractérisés en ce qu'**on utilise comme polyamines X(NH₂)ₙ fournissant l'élément structural X des composés choisis dans le groupe constitué par l'éthylènediamine, la 1,2-propylènediamine, la 1,3-propylènediamine, la 1,4-butanediamine, la néopentanediamine, le 1,5-diamino-2-méthylpentane, la 2-butyl-2-éthyl-1,5-pentanediamine, la 1,6-hexaméthylènediamine, le 2,5-diamino-2,5-diméthylhexane, le 2,2,4- et/ou le 2,4,4-triméthyl-1,6-diaminohexane, le 1,8-diamino-octane, le 1,11-diamino-undécane, le 1,12-diaminododécane, la 4-aminométhyl-1,8-octanediamine (triaminononane), la diéthylènetriamine, la triéthylènetétramine, des amines cycloaliphatiques, comme par exemple le 1-amino-3,3,5-triméthyl-5-aminométhyl-cyclohexane (isophoronediamine, IPDA), la TCD-diamine, la 1,4-cyclohexanediamine, la 2,4- et/ou la 2,6-hexahydrotoluylènediamine (H₆TDA), l'isopropyl-2,4-diaminocyclohexane et/ou l'isopropyl-2,6-diaminocyclohexane, la tricyclodécanebis(méthylamine), le 1,3-bis-(aminométhyl)-cyclohexane, le 2,4'- et/ou le 4,4'-diaminodicyclohexylméthane, le 3,3'-diméthyl-4,4'-diamino-dicyclohexylméthane, les diaminodicyclohexylméthanes isomères, comportant un groupe méthyle comme substituant sur le noyau (C-monométhyl-diaminodicyclohexylméthanes), la 3(4)-aminométhyl-1-méthylcyclohexylamine (AMCA), le 1,3-diaminobenzène, le 1,4-diaminobenzène, le 2,4- et le 2,6-diaminotoluène (TDA), le 1,3-bis-(aminométhyl)-benzène, la 3,5-diéthyltoluène-2,4-diamine, la m-xylylènediamine, la 4,6-diméthyl-1,3-benzènediméthanamine, la 4,4'- et/ou 2,4'- et/ou 2,2'-méthylènebisbenzénamine, une diamine d'acide gras dimère, la bis-(3-aminopropyl)-méthylamine, la 4,9-dioxadodécane-1,12-diamine, la 4,7,10-trioxatridécane-1,13-diamine, des diamines contenant des groupes alcoxysilane, des adduits de Michael qui sont obtenus par réaction d'amines primaires bifonctionnelles avec des composés contenant des groupes insaturés.

3. Procédé pour la préparation de prépolymères selon la revendication 1, **caractérisé en ce qu'**on fait réagir des di- ou polyisocyanates avec un composé de faible masse moléculaire, à terminaison formamide, et on sépare par distillation l'excès de diisocyanate éventuellement présent.

4. Procédé pour la préparation de prépolymères selon la revendication 3, **caractérisé en ce qu'**on fait réagir n à (n × 10) moles de di- ou polyisocyanates avec une mole de composé de faible masse moléculaire, à terminaison formamide de formule (III)
X-[-NH(CHO)]ₙ (III)
X et n ayant la signification indiquée dans la revendication 1, et on sépare par distillation l'excès de diisocyanate éventuellement présent.

5. Utilisation de prépolymères selon la revendication 1, pour la fabrication d'adhésifs et de matières d'étanchéité.

6. Utilisation de prépolymères selon la revendication 1, pour la fabrication de peintures.

7. Utilisation de prépolymères selon la revendication 1, pour la fabrication de corps en mousse ou de corps moulés à base de PUR.

8. Adhésifs contenant des prépolymères selon la revendication 1.

9. Matières d'étanchéité contenant des prépolymères selon la revendication 1.

10. Peintures contenant des prépolymères selon la revendication 1.
